(19) Europäisches Patentamt
European Patent Office
Office européen des brevets

(11) Veröffentlichungsnummer: **0 336 187**
**A2**

(12) # EUROPÄISCHE PATENTANMELDUNG

(21) Anmeldenummer: 89104905.8

(22) Anmeldetag: 18.03.89

(51) Int. Cl.[4]: C07F 9/40 , C07F 9/44 , C07F 9/65 , A01N 57/02 , C07F 9/42

(30) Priorität: 31.03.88 DE 3811004

(43) Veröffentlichungstag der Anmeldung: 11.10.89 Patentblatt 89/41

(84) Benannte Vertragsstaaten: BE CH DE ES FR GB IT LI NL

(71) Anmelder: BAYER AG
D-5090 Leverkusen 1 Bayerwerk(DE)

(72) Erfinder: Sommer, Herbert, Dr.
Platz 59
D-5630 Remscheid(DE)
Erfinder: Arlt, Dieter, Prof. Dr.
Rybnikerstrasse 2
D-5000 Köln 80(DE)
Erfinder: Hartwig, Jürgen, Dr.
Franz-Esser-Strasse 44
D-5090 Leverkusen 3(DE)
Erfinder: Homeyer, Bernhard, Dr.
Obere Strasse 28
D-5090 Leverkusen 3(DE)
Erfinder: Matthaei, Hans-Detlef, Dr.
Paul-Klee-Strasse 67
D-5090 Leverkusen 1(DE)

(54) **Thionophosphonsäure(amid)ester.**

(57) Die Erfindung betrifft Thionophosphonsäure(amid)ester der allgemeinen Formel

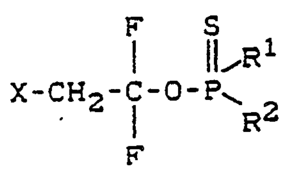

(I)

gefunden,
in welcher
$R^1$ für gegebenenfalls substituierte Reste aus der Reihe Alkyl und Alkenyl steht,
$R^2$ für gegebenenfalls substituierte Reste aus der Reihe Alkoxy, Alkenyloxy, Alkinyloxy oder für die Gruppe

EP 0 336 187 A2

$$-N\genfrac{}{}{0pt}{}{R^3}{R^4} \text{ steht,}$$

in welcher
$R^3$ und $R^4$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom einen 5- bis 7-gliedrigen, gesättigten oder ungesättigten Ring bilden und
X für Halogen steht,
welche als Schädlingsbekämpfungsmittel verwendet werden können.

## Thionophosphonsäure(amid)ester

Die Erfindung betrifft neue Thionophosphonsäure(amid)ester, ein Verfahren zu ihrer Herstellung, ihre Verwendung als Schädlingsbekämpfungsmittel, insbesondere als Insektizide, Akarizide und Nematizide sowie neue Zwischenprodukte und ein Verfahren zur Herstellung solcher Zwischenprodukte.

Es ist bereits bekannt, daß bestimmte Thionophosphor(phosphon)säureamidester, wie zum Beispiel O-Methyl-O-(2-chlor-1-fluor-ethyl)-thionophosphorsäurediesteramid, pestizid wirksam sind (vgl. DE-OS 26 29 016 bzw. die entsprechende US-PS 4 159 324). Die Wirkung und die Wirkungsdauer dieser bekannten Verbindungen sind jedoch, insbesondere bei niedrigen Aufwandmengen bzw. Wirkstoffkonzentrationen, nicht immer voll zufriedenstellend.

Es wurden nun neue Thionophosphonsäure(amid)ester der allgemeinen Formel

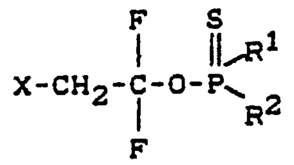

(I)

gefunden,
in welcher
$R^1$ für gegebenenfalls substituierte Reste aus der Reihe Alkyl und Alkenyl steht,
$R^2$ für gegebenenfalls substituierte Rest aus der Reihe Alkoxy, Alkenyloxy, Alkinyloxy oder für die Gruppe

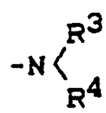 steht,

in welcher
$R^3$ und $R^4$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom einen 5- bis 7-gliedrigen, gesättigten oder ungesättigten Ring bilden
und
X für Halogen steht.

Die Verbindungen der Formel (I) besitzen ein asymmetrisch substituiertes Phosphoratom und gegebenenfalls ein asymmetrisch substituiertes Kohlenstoffatom. Sie können daher in verschiedenen optischen Isomerenformen vorliegen, die in unterschiedlichen Mengenverhältnissen anfallen können. In allen Fällen liegen sie vorwiegend als Racemate vor. Die Erfindung betrifft sowohl die Isomerengemische als auch die einzelnen Isomeren.

Weiterhin wurde gefunden, daß man die neuen Thionophosphonsäure(amid)ester der Formel (I) erhält, wenn man O-(1,1-Difluor-2-halogen-ethyl)-thionophosphonsäureesterhalogenide der Formel

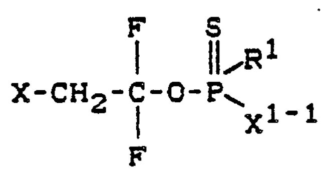

(II)

in welcher
X und $R^1$ die oben angegebene Bedeutung haben und
$X^{1-1}$ für Halogen, vorzugsweise Chlor, steht,

(a) mit Aminen der Formel

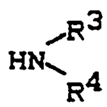

(III)

in welcher
$R^3$ und $R^4$ die oben angegebene Bedeutung haben,
gegebenenfalls in Gegenwart eines Verdünnungsmittels und gegebenenfalls in Gegenwart eines Säureakzeptors
oder

(b) mit Alkoholen der Formel

$R^{2-1}$ - M (IV)

in welcher
$R^{2-1}$ für gegebenenfalls substituierte Reste aus der Reihe Alkoxy, Alkenyloxy und Alkinyloxy steht und
M für Wasserstoff oder ein Alkalimetall- oder Erdalkalimetalläquivalent steht,
gegebenenfalls in Gegenwart eines Verdünnungsmittels und gegebenenfalls in Gegenwart eines Säureakzeptors umsetzt.

Die neuen Thionophosphonsäure(amid)ester der Formel (I) zeichnen sich in überragender Weise durch eine besonders hohe Wirksamkeit als Schädlingsbekämpfungsmittel, insbesondere als Insektizide, Akarizide und Nematizide, aus.

Die erfindungsgemäßen Stoffe stellen somit eine wertvolle Bereicherung der Technik dar.

Als gegebenenfalls substituiertes Alkyl in der Definition von $R^1$, $R^3$ und $R^4$ in den allgemeinen Formeln, steht geradkettiges oder verzweigtes Alkyl mit vorzugsweise 1 bis 20, besonders bevorzugt 1 bis 12, insbesondere 1 bis 6 und ganz besonders bevorzugt 1 bis 4 Kohlenstoffatomen. Beispielhaft seien gegebenenfalls substituiertes Methyl, Ethyl, n-Propyl, i-Propyl, n-Butyl, sec-Butyl, i-Butyl, tert-Butyl, n-Pentyl, i-Pentyl und tert-Pentyl genannt.

Für den Begriff gegebenenfalls substituiertes Alkenyl selbst oder als Bestandteil der Gruppe Alkenyloxy in den Definitionen von $R^1$, $R^2$, $R^{2-1}$, $R^3$ und $R^4$ in den allgemeinen Formeln steht geradkettiges oder verzweigtes Alkenyl mit vorzugsweise 2 bis 8, besonders bevorzugt 2 bis 6 und insbesondere 2 bis 4 Kohlenstoffatomen. Beispielhaft seien gegebenenfalls substituiertes Vinyl, Allyl, 2-Butenyl, 3-Butenyl und 1-Methallyl genannt.

Unter dem Begriff gegebenenfalls substituiertes Alkoxy in der Definition von $R^2$ und $R^{2-1}$ in den allgemeinen Formeln ist geradkettiges oder verzweigtes Alkoxy mit vorzugsweise 1 bis 6, inbesondere 1 bis 4 Kohlenstoffatomen zu verstehen. Beispielhaft seien gegebenenfalls substituiertes Methoxy, Ethoxy, Propoxy, Butoxy sowie ihre Isomeren, wie z. B. i-Propoxy, i-, s-und tert.-Butoxy genannt, wobei gegebenenfalls substituiertes Methoxy und Ethoxy besonders hervorgehoben werden sollen.

Unter dem Begriff gegebenenfalls substituiertes Alkinyl selbst oder als Bestandteil der Gruppe Alkinyloxy in den Definitionen $R^2$, $R^{2-1}$, $R^3$ und $R^4$ in den allgemeinen Formeln ist geradkettiges oder verzweigtes Alkinyl mit vorzugsweise 2 bis 6, insbesondere 2 bis 4 Kohlenstoffatomen zu verstehen. Beispielhaft seien gegebenenfalls substituiertes Ethinyl, 2-Propinyl, 2-Butinyl, 3-Butinyl und 1-Methyl-2-propinyl genannt.

Als gegebenenfalls substituiertes Cycloalkyl in den Definitionen $R^2$ und $R^3$ steht Cycloalkyl mit vorzugsweise 3 bis 8, insbesondere 3, 5 oder 6 Kohlenstoffatomen. Beispielhaft seien gegebenenfalls substituiertes Cyclopropyl, Cyclobutyl, Cyclopentyl, Cyclohexyl und Cycloheptyl genannt.

Die in der Definition von $R^1$, $R^2$, $R^{2-1}$, $R^3$ und $R^4$ genannten substituierten Reste können einen oder mehrere, vorzugsweise 1 bis 3, insbesondere 1 oder 2 gleiche oder verschiedene Substituenten tragen. Als bevorzugte Substituenten für Alkyl, Alkenyl und Alkinyl seien aufgeführt:
Alkoxy mit 1 bis 4 Kohlenstoffatomen, wie Methoxy, Ethoxy, n-Propoxy, i-Propoxy, n-Butoxy, i-Butoxy, sec-Butoxy, tert-Butoxy und Halogen.

Die Reste Alkoxy, Alkenyloxy und Alkinyloxy sind vorzugsweise durch Halogene wie Fluor, Chlor, Brom und Iod, insbesondere Fluor, Chlor und Brom und $C_1$-$C_4$-Alkoxy substituiert.

Als bevorzugte Substituenten für Cycloalkyl seien aufgeführt:
Alkyl mit 1 bis 4 Kohlenstoffatomen, wie Methyl, Ethyl, n-Propyl, i-Propyl, n-Butyl, i-Butyl, sec-Butyl und tert-Butyl, Halogenalkyl, wie z.B. Trifluormethyl und Halogen.
Halogen, in der Definition X und $X^{1-1}$ in den allgemeinen Formeln sowie als Substituenten für eine Gruppe, steht für Fluor, Chlor, Brom und Iod, insbesondere Fluor, Chlor und Brom, wobei im Falle von X Halogen vorzugsweise Chlor und Brom bedeutet und im Falle von $X^{1-1}$ Halogen vorzugsweise für Chlor steht.

Wenn $R^2$ und $R^3$ gemeinsam mit dem Stickstoffatom einen Ring bilden enthält dieser 5 bis 7, vorzugsweise 5 oder 6 Ringglieder. Der Ring kann 1 bis 3 Doppelbindungen enthalten, vorzugsweise ist er jedoch gesättigt. Als besonders bevorzugte Ringe seien der Pyrrolidin- und der Piperidin-Ring genannt.

In den allgemeinen Formeln steht $R^1$ vorzugsweise bei $C_1$-$C_4$-Alkyl, insbesondere für Methyl und Ethyl.

$R^2$ steht in den allgemeinen Formeln vorzugsweise für $C_1$-$C_4$-Alkoxy, insbesondere Methoxy und Ethoxy.

In den Verbindungen, in welchen $R^2$ für die -$NR^3R^4$-Gruppe steht, bedeutet vorzugsweise einer der Rese $R^3$ und $R^4$ Wasserstoff. Besonders bevorzugt steht $R^3$ für Wasserstoff und $R^4$ für $C_1$-$C_4$-Alkyl oder für $C_2$-$C_4$-Alkenyl.

Halogen X bedeutet vorzugsweise Chlor oder Brom.

Die Reste $R^1$, $R^2$, $R^3$ und $R^4$ sind vorzugsweise unsubstituiert.

Von den erfindungsgemäßen Thionophosphonsäure(amid)estern der Formel (I) sind diejenigen bevorzugt,
in welchen
$R^1$ für gegebenenfalls durch Halogen substituiertes $C_1$-$C_4$-Alkyl und $C_2$-$C_4$-Alkenyl steht,
$R^2$ für gegebenenfalls durch Halogen und/oder $C_1$-$C_4$-Alkoxy substituiertes $C_1$-$C_4$-Alkoxy, $C_2$-$C_4$-Alkenyloxy und $C_2$-$C_4$-Alkinyloxy oder für die Gruppe

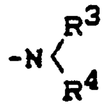 steht,

in welcher
$R^3$ und $R^3$ gleich oder verschieden sind und unabhängig voneinander für Wasserstoff, für gegebenenfalls durch Halogen und/oder $C_1$-$C_4$-Alkoxy substituiertes $C_1$-$C_4$-Alkyl; für gegebenenfalls durch Methyl, Ethyl, Fluor und/oder Chlor substituiertes Cycloalkyl mit3 bis 8 Kohlenstoffatomen; für gegebenenfalls durch Halogen, Methyl und/oder Ethyl substituiertes $C_2$-$C_4$-Alkenyl und $C_2$-$C_4$-Alkinyl stehen
oder
gemeinsam mit dem Stickstoffatom einen 5- oder 6-gliedrigen, gesättigten oder ungesättigten Ring bilden und
X für Fluor, Chlor oder Brom steht.

Unter diesen Verbindungen sind solche besonders bevorzugt,
in welchen
$R^1$ für gegebenenfalls durch Halogen substituiertes $C_1$-$C_4$-Alkyl steht,
$R^2$ für gegebenenfalls durch Halogen oder $C_1$-$C_4$-Alkoxy substituiertes $C_1$-$C_4$-Alkoxy steht, oder für die Gruppe

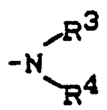 steht,

in welcher
$R^3$ und $R^4$ gleich oder verschieden sind und für Wasserstoff oder gegebenenfalls durch Halogen oder $C_1$-$C_4$-Alkoxy substituiertes $C_1$-$C_4$-Alkyl steht (wobei vorzugsweise einer der Reste Wasserstoff bedeutet) und
X für Chlor oder Brom steht.

Besonders bevorzugt sind diejenigen Thionophosphonsäure(amid)ester der Formel (I),
in welchen
$R^1$ für gegebenenfalls durch Fluor und/oder Chlor substituiertes $C_1$-$C_2$-Alkyl und $C_2$-$C_3$-Alkenyl steht,
$R^2$ für gegebenenfalls durch Fluor, Chlor, Methoxy und/oder Ethoxy substituiertes $C_1$-$C_4$-Alkoxy, $C_2$-$C_3$-Alkenyloxy, $C_2$-$C_3$-Alkinyloxy oder für die Gruppe

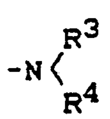 steht,

in welcher
$R^3$ und $R^4$ gleich oder verschieden sind und unabhängig voneinander für Wasserstoff, für gegebenenfalls durch Fluor, Chlor, Brom, Methoxy und/oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor, Chlor, Methyl und/oder Ethyl substituiertes $C_2$-$C_4$-Alkenyl und $C_2$-$C_4$-Alkinyl stehen,
oder
gemeinsam mit dem Stickstoffatom, an welches sie gebunden sind, für Piperidyl und Pyrrolidinyl stehen
und
X für Fluor, Chlor und Brom steht.

Ganz besonders bevorzugt sind diejenigen Thionophosphonsäure(amid)ester der Formel (I),
in welchen
$R^1$ für Methyl und Ethyl steht,
$R^2$ für Methoxy, Ethoxy, Methylamino, Ethylamino, n- und iso-Propylamino, sec-Butylamino, Diethylamino, Allylamino steht und
X für Chlor und Brom steht.

Verwendet man als Ausgangsstoffe beispielsweise O-(2-Chlor-1,1-difluor-ethyl)-ethan-thionophosphonsäureesterchlorid und n-Propylamin, so kann der Reaktionsablauf der erfindungsgemäßen Verfahrens durch das folgende Formelschema wiedergegeben werden:

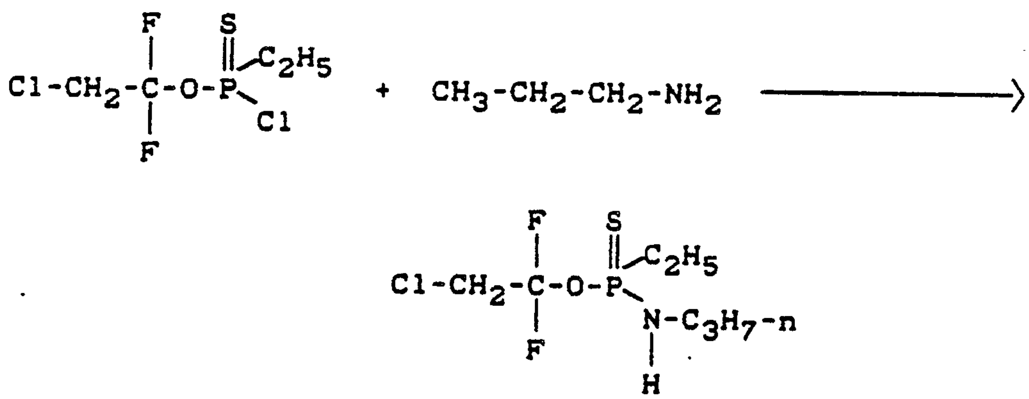

Verwendet man als Ausgangsstoffe beispielsweise O-(2-Chlor-1,1-difluor-ethyl)-ethanthionophosphonsäureesterchlorid und Natriumethylat, so kann der Reaktionsablauf des erfindungsgemäßen Verfahrens durch das folgende Formelschema wiedergegeben werden:

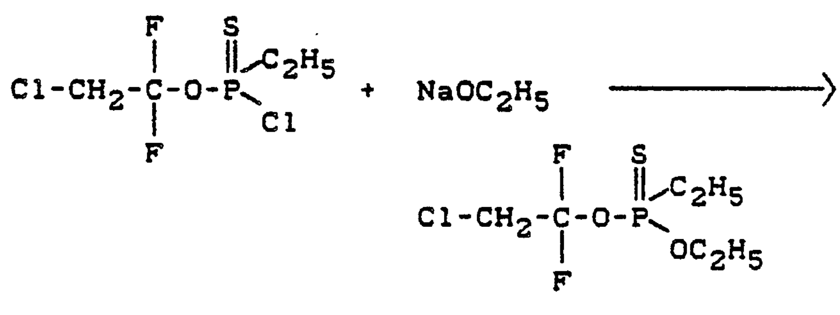

Die bei dem erfindungsgemäßen Verfahren als Ausgangsstoffe zu verwendenden O-(1,1-Difluor-2-halogen-ethyl)-thionophosphonsäureesterhalogenide sind durch die Formel (II) allgemein definiert. In dieser Formel (II) stehen X, $X^{1-1}$ und $R^1$ vorzugsweise bzw. besonders bevorzugt für diejenigen Reste, welche oben bei den Definitionen für die Formeln (I) bzw. (II) angegeben sind.

Die O-(1,1-Difluor-2-halogen-ethyl)-thionophosphonsäureesterhalogenide der Formel (II) sind neu und Teil der vorliegenden Erfindung.

Man erhält die Verbindungen der Formel (II), wenn man O-(1,1-Difluor-2-halogen-ethyl)-phosphonsäureesterhalogenide der Formel

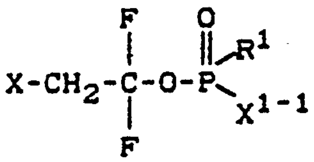 (V)

in welcher
X, $X^{1-1}$ und $R^1$ die oben angegebene Bedeutung haben,
mit Thiophosphorylchlorid der Formel
$PSCl_3$ (VI)
gegebenenfalls in Gegenwart eines Verdünnungsmittels und gegebenenfalls in Gegenwart eines Phosphorsulfids, wie beispielsweise Phosphor(V)sulfid ($P_2S_5$, $P_4S_{10}$) oder 2,4-bis-(4-Methoxyphenyl)-1,3,2,4-dithiadiphosphetan-2,4-disulfid (Lawesson's Reagenz) umsetzt.

Die als Ausgangsstoffe zu verwendenden O-(1,1-Difluor-2-halogen-ethyl)-phosphonsäureesterhalogenide sind durch die Formel (V) allgemein definiert. In dieser Formel (V) stehen $R^1$, X und $X^{1-1}$ vorzugsweise bzw. besonders bevorzugt für diejenigen Reste, welche oben bei den Definitionen für Formel (I) angegeben sind.

Die Verbindungen der Formel (V) sind neu, können aber nach literaturbekannten Verfahren und Methoden hergestellt werden (vgl. DE-OS 25 28 996).

Das weiterhin als Ausgangsstoff zu verwendende Thiophosphorylchlorid der Formel (VI) ($PSCl_3$) ist eine allgemein bekannte Verbindung der anorganischen Chemie.

Als Verdünnungsmittel zur Herstellung der neuen Verbindungen der Formel (II) kommen praktisch inerte organische Lösungsmittel sowie Thiophosphorylchlorid infrage.

Hierzu gehören vorzugsweise aromatische, gegebenenfalls halogenierte Kohlenwasserstoffe, wie Toluol, Xylol, Chlorbenzol, o-Dichlorbenzol, Dichlortoluol und Mono-oder Dichlorxylol. Besonders bevorzugt ist Thiophosphorylchlorid.

Bei dem erfindungsgemäßen Verfahren zur Herstellung der neuen Verbindungen der Formel (II) arbeitet man im allgemeinen bei Temperaturen zwischen 100 °C und 160 °C, vorzugsweise bei Temperaturen zwischen 120 °C und 140 °C.

Bei der Durchführung des erfindungsgemäßen Verfahrens zur Herstellung der Verbindungen der Formel (II) setzt man 1 Mol Ausgangsstoff der Formel (V) mit 1 bis 20 Mol, vorzugsweise 1 bis 6 Mol Thiophosphorylchlorid und 0,0001 bis 0,2 Mol, vorzugsweise 0,001 bis 0,01 Mol Phosphor(V)sulfid um. Die Umsetzungen werden im allgemeinen bei Normaldruck durchgeführt.

Bei der Durchführung des erfindungsgemäßen Verfahrens zur Herstellung der Verbindungen der allgemeinen Formel (II) wird der Ausgangsstoff der Formel (V) in einem der angegebenen Lösungsmittel, besonders bevorzugt Thiophosphorylchlorid, zusammen mit Phosphor(V)sulfid unter Rückfluß erhitzt, wobei das gebildete Phosphoroxychlorid laufend abdestilliert wird. Nach beendeter Reaktion können die als Rohprodukte anfallenden Verbindungen der Formel (II) in konventioneller Weise gereinigt werden, vorteilhaft durch fraktionierte Destillation unter vermindertem Druck. Zu ihrer Charakterisierung dient der Retentionsindex (Kovats-Index).

Das erfindungsgemäße Verfahren zur Herstellung der neuen Verbindungen der Formel (I) wird bevorzugt unter Verwendung von Verdünnungsmitteln durchgeführt.

Hierzu gehören insbesondere aliphatische oder aromatische, gegebenenfalls halogenierte Kohlenwasserstoffe, wie beispielsweise Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Dimethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und -ethylester, Nitrile wie z.B. Acetonitril und Propionitril, Amide wie z.B. Dimethylformamid, Dimethylacetamid unf N-Methyl-pyrrolidon sowie Dimethylsulfoxid, Tetramethylensulfon und Hexamethylphosphorsäuretriamid.

Als Säureakzeptoren können bei dem Verfahren zur Herstellung der neuen Verbindungen der Formel (I) alle üblicherweise für derartige Umsetzungen verwendbaren Säurebindemittel eingesetzt werden. Vorzugsweise in Frage kommen Erdalkalimetallhydroxide wie z.B. Calciumhydroxid, Alkalicarbonate und -alkoholate wie Natrium-und Kaliumcarbonat, Natrium- und Kaliummethylat bzw. -ethylat, ferner aliphatische, aromatische oder heterocyclishe Amine, beispielsweise Triethylamin, Trimethylamin, Dimethylanilin, Dimethylbenzylamin, Pyridin, Collidin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem Verfahren zur Herstellung der Verbindungen der Formel (I)

in einem größeren Bereich variiert werden. Im allgemeinen arbeitet man bei Temperaturen zwischen 0° C und 100° C, vorzugsweise bei Temperaturen zwischen 20° C und 60° C.

Die Umsetzung läßt man im allgemeinen bei Normaldruck ablaufen. Zur Durchführung des erfindungsgemäßen Verfahrens setzt man die Reaktionsteilnehmer vorzugsweise im äquimolaren Verhältnis ein. Ein Überschuß der einen oder anderen Komponente bringt keine wesentlichen Vorteile. Die Reaktion wird vorzugsweise in einem der angegebenen Lösungsmittel in Gegenwart eines Säureakzeptors durchgeführt. Die Aufarbeitung des Ansatzes erfolgt nach üblichen Methoden durch Filtration, Waschen des Filtrats und Abdestillieren des Lösungsmittels.

Die neuen Verbindungen fallen in Form von Ölen an, die sich teilweise nicht unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt werden können. Zu ihrer Charakterisierung dient der Retentionsindex (Kovats-Index).

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca

spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Os cinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Pananychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hervorragende insektizide Wirksamkeit aus. Sie zeigen insbesondere beim Einsatz als Bodeninsektizide eine hervorragende Wirkung gegen Maden, wie z.B. Porbia antiqua-Maden, gegen Blattläuse, wie z.B. Myzus persicae und Aphis-fabae sowie eine hervorragende Wirkung gegen Nematoden, wie z.B. Meliodogyne incognita.

Die erfindungsgemäßen Wirkstoffe zeichnen sich durch eine hervorragende insektizide Wirksamkeit, insbesondere bei der Bekämpfung von Orthoptera-Arten, wie z.B. Blattella germanica und Coleoptera-Arten, wie z.B. Sitophilus granarius, aus.

Die erfindungsgemäßen Wirkstoffe können auch sehr gut zur Bekämpfung von Hygieneschädlingen, wie z.B. Musca domestica-Dipteren, Aedes aegypti-Dipteren und Aedes aegypti-Larven, eingesetzt werden.

Einige der erfindungsgemäßen Wirkstoffe zeigen auch blattinsektizide Wirkung.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwen det werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxide, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

## Herstellungsbeispiele:

### Beispiel I-1

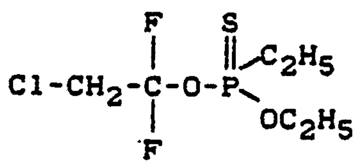

Zu einer Lösung von 7,3 g (0,03 Mol) O-(2-Chlor-1,1-difluor-ethyl)-ethanthionophosphonsäureesterchlorid in 50 ml Toluol tropft man bei 0 °C 10,2 g einer 20 %igen Natriumethylat-Lösung (0,03 Mol) ein und rührt 4 Stunden bei Raumtemperatur. Anschließend engt man ein, nimmt in Toluol auf, wäscht zweimal mit Wasser, trocknet die organische Phase, zieht das Lösungsmittel ab und destilliert den Rückstand am Kugelrohr.

Man erhält in 36%iger Ausbeute O-Ethyl-O-(2-chlor-1,1-difluor-ethyl)-ethanthionophosphonsäureester mit dem Retentionsindex 1233 *.

### Beispiel I-2

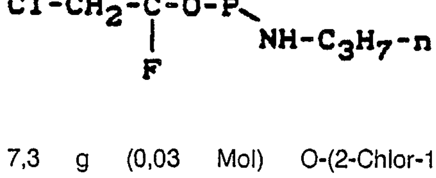

Zu einer Lösung von 7,3 g (0,03 Mol) O-(2-Chlor-1,1-difluor-ethyl)-ethanthionophosphonsäureesterchlorid in 50 ml Toluol tropft man bei Raumtemperatur 3,6 g (0,06 Mol) n-Propylamin. Das Reaktionsgemisch wird zweimal mit Wasser gewaschen, die organische Phase abgetrennt, über Magne-

* Die Retentionsindices (Kovats-Index) wurden gaschromatographisch auf einer Siedepunktsphase (Dimethylsilicon) ermittelt.

siumsulfat getrocknet und das Toluol unter vermindertem Druck abgezogen.

Man erhält 3,5 g (66 % der Theorie) O-(2-Chlor-1,1-difluor-ethyl)-ethanthionophosphonsäureester-propylamid mit dem Retentionsindex 1461 * .

In analoger Weise zu Beispiel (I-1) und (I-2) und unter Berücksichtigung der Angaben in der Beschreibung zu dem erfindungsgemäßen Verfahren, werden die in der folgenden Tabelle 1 aufgeführten Endprodukte der Formel

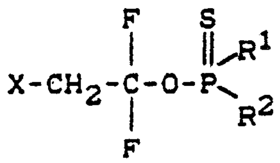

(I)

erhalten.

Tabelle 1

| Bsp. Nr. | X | $R^1$ | $R^2$ | Retentions-index* |
|---|---|---|---|---|
| I-3 | Cl | $-C_2H_5$ | $-NH-C_3H_7$-iso | 1397 |
| I-4 | Cl | $-C_2H_5$ | $-OCH_3$ | 1161 |
| I-5 | Cl | $-CH_3$ | $-OCH_3$ | 1081 |
| I-6 | Cl | $-CH_3$ | $-NH-C_3H_7$-iso | 1325 |
| I-7 | Cl | $-CH_3$ | $-OC_2H_5$ | 1141 |

* Die Retentionsindices (Kovats-Index) wurden gaschromatographisch auf einer Siedepunktsphase (Dimethylsilicon) ermittelt.

Tabelle 1 - Fortsetzung

| Bsp. Nr. | X | $R^1$ | $R^2$ | Retentions-index* |
|---|---|---|---|---|
| I-8 | Cl | $-CH_3$ | $-NH-CH_2-CH=CH_2$ | 1369 |
| I-9 | Cl | $-CH_3$ | $-N(C_2H_5)_2$ | 1387 |
| I-10 | Cl | $-CH_3$ | $-NH-C_3H_7$-n | 1384 |
| I-11 | Cl | $-C_2H_5$ | $-N(C_2H_5)_2$ | 1469 |
| I-12 | Cl | $-C_2H_5$ | $-NH-CH_2-CH=CH_2$ | 1443 |
| I-13 | Cl | $-C_2H_5$ | $-NH-C_2H_5$ | 1372 |
| I-14 | Br | $-C_2H_5$ | $-NH-C_4H_9$-sec | 1578 |
| I-15 | Br | $-C_2H_5$ | $-NH-C_3H_7$-iso | 1485 |
| I-16 | Br | $-C_2H_5$ | $-OCH_3$ | 1249 |
| I-17 | Br | $-C_2H_5$ | $-OC_2H_5$ | 1301 |
| I-18 | Br | $-C_2H_5$ | $-N(C_2H_5)_2$ | 1548 |
| I-19 | Cl | $-C_2H_5$ | $-NH-C_4H_9$-sec. | 1496 |

* Die Retentionsindices (Kovats-Index) wurden gaschromatographisch auf einer Siedepunktsphase (Dimethylsilicon) ermittelt.

## Herstellung von Ausgangsprodukten

### Beispiel (II-1)

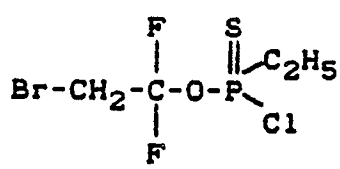

581 g (2,14 Mol) O-(2-Brom-1,1-difluor-ethyl)-ethanphosphonsäureesterchlorid, 1303 g (7,7 Mol) Thiophosphorylchlorid und 13,1 g (0,06 Mol) Phosphor(V)sulfid werden 5 Tage auf 140° C Badtemperatur erhitzt und anschließend destilliert.

Man erhält 566 g (92 % der Theorie) O-(2-Brom-1,1-difluor-ethyl)-ethanthionophosphonsäureesterchlorid

* Die Retentionsindices (Kovats-Index) wurden gaschromatographisch auf einer Siedepunktsphase (Dimethylsilicon) ermittelt.

vom Siedepunkt 61 ° C/0,7 mbar mit dem Retentionsindex 1242 * .

Nach der im Beispiel (II-1) engegebenen Methode werden auch die in der folgenden Tabelle 2 aufgeführten Verbindungen der Formel

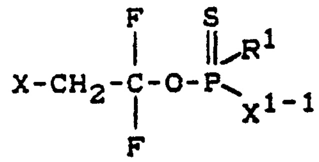

(II)

erhalten:

Tabelle 2

| Bsp. Nr. | X | $R^1$ | $X^{1-1}$ | Retentionsindex* |
|---|---|---|---|---|
| II-2 | Cl | $-CH_3$ | Cl | 1078 |
| II-3 | Cl | $-C_2H_5$ | Cl | 1159 |

* Die Retentionsindices (Kovats-Index) wurden gaschromatographisch auf einer Siedepunktsphase (Dimethylsilicon) ermittelt.

Verwendungsbeispiele

In den nachfolgenden Verwendungsbeispielen wurde die nachstehend angegebene Verbindung als Vergleichsverbindung eingesetzt:

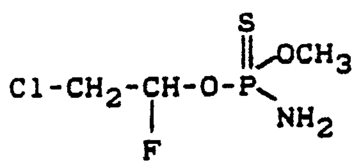

(A)

(bekannt aus DE-OS 26 29 016 bzw. der entsprechenden US-PS 4 159 324).

Beispiel A

Grenzkonzentrations-Test / Bodeninsekten

| | |
|---|---|
| Testinsekt: | Phorbia antiqua-Maden (im Boden) |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt

diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. die Verbindungen der Herstellungsbeispiele I-3, I-4, I-1, I-6, I-10, I-12, I-13 und I-2 bei einer beispielhaften Konzentration von 20 ppm einen Abtötungsgrad von 100 %, während die Vergleichsverbindung bei der gleichen Konzentration einen Abtötungsgrad von 0 % ergab.

Beispiel B

Grenzkonzentrations-Test / Wurzelsystemische Wirkung

| | |
|---|---|
| Testinsekt: | Myzus persicae |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet wind und 0 %, wenn noch genau so viele Testinsekten leben wie bei der unbehandelten Kontrolle.

Bei diesem Test zeigte z.B. die Verbindung des Herstellungsbeispieles I-2 bei einer beispielhaften Konzentration von 10 ppm eine Abtötungszahl von 95 %, während die Vergleichsverbindung bei der gleichen Konzentration eine Abtötungszahl von 0 % ergab.

Beispiel C

Grenzkonzentrations-Test / Nematoden

| | |
|---|---|
| Testnematode: | Meloidogyne incognita |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigten z.B. die Verbindungen der Herstellungsbeispiele I-13 und I-2 bei einer beispielhaften Konzentration von 2,5 ppm einen Wirkungsgrad von 95-100 %, während die Vergleichsverbindung bei der gleichen Konzentration einen Wirkungsgrad von 0 % ergab.

Beispiel D

$LT_{100}$-Test für Dipteren

Testtiere: Musca domestica
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigten z.B. die Verbindungen der Herstellungsbeispiele I-3, I-1, I-6, I-12, I-13 und I-2 bei einer beispielhaften Konzentration von 0,02 % eine $LT_{100}$ von 25′ bis 50′, während die Vergleichsverbindung bei der gleichen Konzentration eine $LT_{100}$ von 90′ ergab.

Beispiel E

$LD_{100}$-Test

Testtiere: Blattella germanica
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigten z.B. die Verbindungen der Herstellungsbeispiele I-3, I-4, I-1, I-6, I-8, I-12, I-13 und I-2 bei einer beispielhaften Konzentration von 0,002 % eine Abtötung von 100 %, während die Vergleichsverbindung bei der gleichen Konzentration eine Abtötung von 60 % ergab.

Beispiel F

$LD_{100}$-Test

Testtiere: Sitophilus granarius
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigten z.B. die Verbindungen der Herstellungsbeispiele I-3, I-4, I-1, I-6, I-8, I-12, I-13 und I-2 bei einer beispielhaften Konzentration von 0,002 % eine Abtötung von 100 %, während die Vergleichsverbindung bei der gleichen Konzentration eine Abtötung von 30 % ergab.

## Beispiel G

$LT_{100}$-Test für Dipteren

Testtiere: Aedes aegypti
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigten z.B. die Verbindungen der Herstellungsbeispiele I-3, I-5, I-6, I-8, I-12, I-13 und I-2 bei einer beispielhaften Konzentration von 0,002 % eine $LT_{100}$ von 60-120′, während die Vergleichsbverbindung bei der gleichen Konzentration eine $LT_{100}$ von $3^h$ (50 %) ergab.

## Beispiel H

Mückenlarven-Test

| | |
|---|---|
| Testtiere: | Aedes aegypti |
| Lösungsmittel: | 99 Gewichtsteile Aceton |
| Emulgator: | 1 Gewichtsteil Benzylhydroxbiphenylpolyglykolether |

Zur Herstellung einer zweckmäßigen Wirkstoffzubereitung löst man 2 Gew.-Teile Wirkstoff in 1000 Volumenteilen Lösungsmittel, das Emulgator in der oben angegebenen Menge enthält. Die so erhaltene Lösung wird mit Wasser auf die gewünschten geringeren Konzentrationen verdünnt.

Man füllt die wäßrigen Wirkstoffzubereitungen der gewünschten Konzentration in Gläser und setzt anschließend etwa 25 Mückenlarven in jedes Glas ein.

Nach 24 Stunden wird der Abtötungsgrad in % bestimmt. Dabei bedeutet 100 %, daß alle Larven abgetötet worden sind. 0 % bedeutet, daß überhaupt keine Larven abgetötet worden sind.

Bei diesem Test zeigten z.B. die Verbindungen der Herstellungsbeispiele I-3, I-4, I-1, I-6, I-8, I-12, I-13 und I-2 bei einer beispielhaften Konzentration von 1 % einen Abtötungsgrad von 100 %, während die

Vergleichsverbindung bei der gleichen Konzentration einen Abtötungsgrad von 0 % ergab.

**Ansprüche**

1. Thionophosphonsäure(amid)ester der allgemeinen Formel

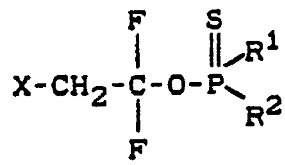

(I)

gefunden,
in welcher
$R^1$ für gegebenenfalls substituierte Reste aus der Reihe Alkyl und Alkenyl steht,
$R^2$ für gegebenenfalls substituierte Reste aus der Reihe Alkoxy, Alkenyloxy, Alkinyloxy oder für die Gruppe

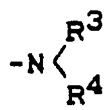 steht,

in welcher
$R^3$ und $R^4$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom einen 5- bis 7-gliedrigen, gesättigten oder ungesättigten Ring bilden
und
X für Halogen steht.

2. Thionophosphonsäure(amid)estern der Formel (I) gemäß Anspruch 1
in welchen
$R^1$ für gegebenenfalls durch Halogen substituiertes $C_1$-$C_4$-Alkyl und $C_2$-$C_4$-Alkenyl steht,
$R^2$ für gegebenenfalls durch Halogen und/oder $C_1$-$C_4$-Alkoxy substituiertes $C_1$-$C_4$-Alkoxy, $C_2$-$C_4$-Alkenyloxy und $C_2$-$C_4$-Alkinyloxy oder für die Gruppe

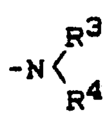 steht,

in welcher
$R^3$ und $R^4$ gleich oder verschieden sind und unabhängig voneinander für Wasserstoff, für gegebenenfalls durch Halogen und/oder $C_1$-$C_4$-Alkoxy substituiertes $C_1$-$C_4$-Alkyl; für gegebenenfalls durch Methyl, Ethyl, Fluor und/oder Chlor substituiertes Cycloalkyl mit 3 bis 8 Kohlenstoffatomen; für gegebenenfalls durch Halogen, Methyl und/oder Ethyl substituiertes $C_2$-$C_4$-Alkenyl und $C_2$-$C_4$-Alkinyl stehen
oder
gemeinsam mit dem Stickstoffatom einen 5- oder 6-gliedrigen, gesättigten oder ungesättigten Ring bilden
und
X für Fluor, Chlor oder Brom steht.

3. Thionophosphonsäure(amid)ester der Formel (I) gemäß Anspruch 1
in welchen
$R^1$ für gegebenenfalls durch Fluor und/oder Chlor substituiertes $C_1$-$C_2$-Alkyl und $C_2$-$C_3$-Alkenyl steht,
$R^2$ für gegebenenfalls durch Fluor, Chlor, Methoxy und/oder Ethoxy substituiertes $C_1$-$C_4$-Alkoxy, $C_2$-$C_3$-Alkenyloxy, $C_2$-$C_3$-Alkinyloxy oder für die Gruppe

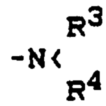 steht,

in welcher
$R^3$ und $R^4$ gleich oder verschieden sind und unabhängig voneinander für Wasserstoff, für gegebenenfalls durch Fluor, Chlor, Brom, Methoxy und/oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor, Chlor, Methyl und/oder Ethyl substituiertes $C_2$-$C_4$-Alkenyl und $C_2$-$C_4$-Alkinyl stehen,
oder
gemeinsam mit dem Stickstoffatom, an welches sie gebunden sind für Piperidyl und Pyrrolidinyl stehen und
X für Fluor, Chlor und Brom steht.

4. Verfahren zur Herstellung der Thionophosphonsäure(amid)ester der allgemeinen Formel

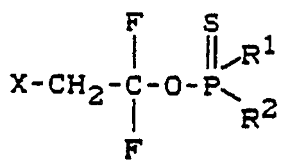 (I)

in welcher
$R^1$ für gegebenenfalls substituierte Reste aus der Reihe Alkyl und Alkenyl steht,
$R^2$ für gegebenenfalls substituierte Reste aus der Reihe Alkoxy, Alkenyloxy, Alkinyloxy oder für die Gruppe

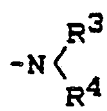 steht,

in welcher
$R^3$ und $R^4$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom einen 5- bis 7-gliedrigen, gesättigten oder ungesättigten Ring bilden und
X für Halogen steht,
dadurch gekennzeichnet, daß man man O-(1,1-Difluor-2-halogen-ethyl)-thionophosphonsäureesterhalogenide der Formel

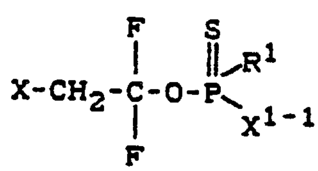 (II)

in welcher
X und $R^1$ die oben angegebene Bedeutung haben und
$X^{1-1}$ für Halogen steht,

(a) mit Aminen der Formel

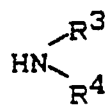

(III)

in welcher
$R^3$ und $R^4$ die oben angegebene Bedeutung haben,
gegebenenfalls in Gegenwart eines Verdünnungsmittels und gegebenenfalls in Gegenwart eines Säureakzeptors
oder

(b) mit Alkoholen der Formel

$R^{2-1}$ - M (IV)

in welcher
$R^{2-1}$ für gegebenenfalls substituierte Reste aus der Reihe Alkoxy, Alkenyloxy und Alkinyloxy steht und
M für Wasserstoff oder ein Alkalimetall-oder Erdalkalimetalläquivalent steht,
gegebenenfalls in Gegenwart eines Verdünnungsmittels und gegebenenfalls in Gegenwart eines Säureakzeptors umsetzt.

5. Schädlingsbekämpfungsmittel, gekennzeichnet durch einen Gehält an mindestens einer Verbindung der Formel (I), gemäß den Ansprüchen 1 oder 4.

6. Verwendung von Verbindungen der Formel (I) gemäß den Ansprüchen 1 oder 4 zur Bekämpfung von Schädlingen.

7. Verfahren zur Bekämpfung von Schädlingen, dadurch gekennzeichnet, daß man Verbindungen der Formel (I) gemäß den Ansprüchen 1 oder 4 auf Schädlingen und/oder ihren Lebensraum einwirken läßt.

8. Verfahren zur Herstellung von Schädlingsbekämpfungsmitteln, dadurch gekennzeichnet, daß man Verbindungen der Formel (I) gemäß den Ansprüchen 1 oder 4 mit Streckmitteln und/oder oberflächenaktiven Mitteln vermischt.

9. O-(1,1-Difluor-2-halogen-ethyl)-thionophosphonsäureesterhalogenide der Formel

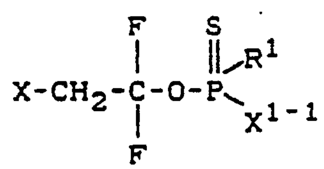

(II)

in welcher
X und $R^1$ die in Anspruch 1 angegebene Bedeutung haben und
$X^{1-1}$ für Halogen steht.

10. Verfahren zur Herstellung der man O-(1,1-Difluor-2-halogen-ethyl)-thionophosphonsäureesterhalogenide der Formel

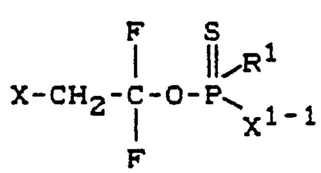

(II)

in welcher
$R^1$ für gegebenenfalls substituierte Reste aus der Reihe Alkyl und Alkenyl steht,
X für Halogen steht und
$X^{1-1}$ für Halogen steht,
dadurch gekennzeichnet, daß man O-(1,1-Difluor-2-halogen-ethyl)-phosphonsäureesterhalogenide der Formel

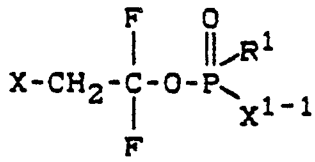

(V)

in welcher

X, $X^{1-1}$ und $R^1$ die oben angegebene Bedeutung haben,

mit Thiophosphorylchlorid der Formel

$PSCl_3$ (VI)

gegebenenfalls in Gegenwart eines Verdünnungsmittels und gegebenenfalls in Gegenwart eines Phosphorsulfids oder in Gegenwart von 2,4-bis-(4-Methoxyphenyl)-1,3,2,4-dithiadiphosphetan-2,4-disulfid (Lawesson's Reagenz) umsetzt.